# EUROPEAN PATENT SPECIFICATION

(11) **EP 4 083 417 B1**
(45) Date of publication and mention of the grant of the patent: **19.03.2025**
(21) Application number: 21171320.1
(22) Date of filing: 29.04.2021
(51) Int. Cl.: F03D 3/04

(54) **METHOD OF OPERATING A WIND TURBINE SYSTEM**
VERFAHREN ZUM BETRIEB EINES WINDTURBINENSYSTEMS
PROCÉDÉ DE FONCTIONNEMENT D'UN SYSTÈME D'ÉOLIENNE

(43) Date of publication of application: 02.11.2022
(73) Proprietor: Introfoc Ltd, 1307 Nicosia (CY)
(72) Inventor: PHLIMIS, Panayiotis, 1307 Nicosia (CY); RAFTIS, Nicos, Limassol 3801 (CY); GEORGIOU, Harry, Limassol 3801 (CY)
(74) Representative: Boult Wade Tennant LLP

(56) References cited:
- CN-A- 110 513 244
- US-A1- 2011 316 279

## Description

### TECHNICAL FIELD

The present disclosure relates to a method of operating a wind turbine system for harnessing or generating energy from wind. The method may be for improving efficiency of vertical axis wind turbines for all wind directions.

### BACKGROUND

One important area of renewable energy exploitation is harnessing of wind power in urban environments. One way to do this is to install wind turbines on roofs of buildings. In an urban environment the turbine itself is typically limited in size, and this requires that system installations can capture the greatest possible volume of wind and direct it and accelerate it towards the turbine to achieve the greatest possible energy generation efficiency. In an urban environment wind speeds often change quickly, and thus being able to capture wind from different directions is critical for overall system performance throughout the 24-hour day and throughout the 365 days of the year. An urban environment also requires that an installation is not too noisy, can be installed easily within the size limitations imposed by different town planning regulations, and is inconspicuous.

There are several known disclosures and apparatuses relating to wind acceleration, for wind turbines, using convergent or divergent sections or both. There are several patents that seek to improve performance of wind turbines in an urban environment by capturing and accelerating wind flow. Generally, such devices include a convergent chamber for air inlet, a chamber that houses a wind turbine, and a diffusing chamber. Existing patents focus on improving laminar flow, increasing the pressure differential from inlet and outlet, obtaining maximum wind acceleration.

US9249807B2 refers to a fluidic flow capture and acceleration apparatus for use in building roofs and focuses on delivering laminar flow to the turbine by using streamliners. This apparatus is limited to a small range of wind directions that are in alignment to the primary axis of the focusing, constricting, and diffusing chambers.

US6638005B2 discloses a rotatable turbine housing having an air inlet opening and an air outlet opening. Although a rotatable turbine housing can respond to changing wind directions, it is inevitably a heavy and bulky structure that may not be suitable for installation on roofs of buildings.

US9593666B2 discloses a turbine housing assembly comprising an enclosure that defines an interior space with openings through which air can flow into the enclosure in a horizontal direction and is then directed in a direction perpendicular to the direction of the airflow. The disclosed system is bulky and would be difficult, in most cases, to install on roofs of urban buildings due to height limitations imposed by town planning regulations. In addition, this system cannot adjust to changing wind direction in the horizontal plane as per typical wind rose.

US20130136576A1 describes a system having an inlet portion comprising vane so that the channel at the inlet portion is divided into a number of flow paths leading towards the wind turbine to focus the air pressure in front of the wind turbine to improve the effect of the air velocity on the wind turbine. This system may be able to provide some improved performance when the wind direction is essentially aligned with the primary axis through the inlet portion, but it does nothing to assist performance when the wind direction changes and is out of alignment with the primary axis through the inlet portion.

US8821117B2 also discloses a system with a convergent section for an air inlet, a section housing the turbine, and a divergent section at an exit and focuses on the ratios of these sections for optimal performance. There is no means of dealing with changing wind direction.

EP2013174534 discloses a wind power module for building rooftops, typically placed at the edge of a roof to take advantage of upstream air flow. Thus, the inflow area is oriented to capture air moving upwards from the side of a building. This system cannot accommodate change of wind direction in the horizontal plane.

DE10331682A1 discloses a system having at the flow inlet at least one guide fin, which, together with the upstream guide surface, delimits a flow channel that tapers towards its mouth and accelerates the flow. The use of guide fins can be helpful in conditioning the air flow at inlet and make the system less sensitive to small variations of the wind direction as long as it is essentially aligned with the primary axis of the system. When the wind direction changes significantly then these systems cannot accommodate the change in wind direction and performance can drop significantly.

A number of patents disclose systems that are intended for mounting on rooftops, but for these systems the entire structure is rotating. For example, US20100032954A1 describes a system comprising two counter-rotating rotors. The rotors are mounted between two opposing aerofoils; the aerofoils and the rotors together being mounted on a turntable. The fact that the entire turntable rotates means that only small turbines (rotors) can be used with such system and hence overall energy yield is small.

US8232664 discloses a turbine surrounded by a structure comprising diverter doors (panels) for controlling the air impinging on the turbine blades. Theses diverter doors are closable in high wind conditions to seal off the wind turbine to protect the turbine against damage. The turbine is aimed at protecting the turbine in conditions of high wind. The structure with open doors at all sides does not allow concentration of air flow.

Other patents describe static structures that surround a turbine, and which static structures are open at all sides. For example, KR102026980B1 describes a support frame that includes a wind collection plate to collect the wind toward the turbine. This however, being open on all sides, does not provide sufficient flow acceleration and performance increase is small. US5852331 and US9951628 also utilize static structures open at all sides, having a plurality of curved vanes in the form of a spiral.

US2011316279A1, entitled "Wind Turbines with Diffusers for the Buildings or Structures," describes an energy and power management system for harvesting wind energy by wind-catcher tower and diffuser augmented wind turbines. The placement of diffusers at the intake of the wind turbines, inside a wind-catcher tower, is used, plus the modular design of the wind-catcher tower.

### SUMMARY

The prior art does not sufficiently address wind turbine system efficiency at different wind directions in combination with different wind speeds. An objective of the present disclosure is to provide a method and system that can provide enhanced efficiency in harvesting the energy of the wind over a long period of time by adapting to the changing conditions of wind speed and wind direction. An objective of this disclosure is to provide an improved method of operating an enhanced and enclosed wind capturing apparatus for building rooftops, capable of capturing and accelerating wind flows and maximising the energy harvested, at all conditions, without having to rotate the complete apparatus.

The present invention therefore provides a method and system in accordance with the claims.

The disclosure refers to a method of operating a wind turbine system preferably with at least one vertical axis wind turbine. One of the advantages of vertical axis wind turbines is that they can capture wind from all directions. However, when the turbine is surrounded by an enclosure or fins for accelerating air flow to improve efficiency, it generally suffers in that the turbine can no longer capture wind from all directions. This disclosure is directed to a method of controlling the adjustable geometry of a wind turbine system to maximise energy harvested over a defined period of time. The system captures and accelerates wind towards a turbine, and is capable of adjusting its geometry and configuration to maintain good performance for different wind speeds and wind directions. The method comprises dynamically controlling the system so that movable parts are adjusted to changing wind velocities. The system may harvest maximum energy over a period of time and may avoid frequent adjustments that could cause instability and hardware failure. Therefore, the method may be for controlling an enclosed wind capturing apparatus to maximise energy harvested and to avoid instabilities and possible failures.

The method is particularly for controlling a surrounding structure to a turbine. The surrounding structure is adjustable to respond to changing wind velocity. The surrounding structure can accelerate air flow and improve turbine efficiency while at the same time being able to adapt to changing wind directions. Thus the efficiency of a vertical axis turbine can be improved while maintaining its omnidirectional characteristic.

The present disclosure relates to method of operating a wind turbine system that can adapt to changing wind speed and direction, in order to maximise the energy harvested by a wind turbine; this wind turbine is placed inside an enclosure, having an inlet convergent section to capture and accelerate the wind and an outlet divergent section. The geometry of the enclosure can adapt to achieve the geometry that will yield the best performance in harvesting the energy of the wind. The system is designed to work well in an urban environment and specifically on rooftops, having to comply with all the constraints of having such a system on building rooftops.

The present disclosure may provide a method comprising the steps of: running a first process for adopting a first configuration, said first process comprising measuring wind velocity for a period of time T1, processing the characteristics of measured values of wind velocity for a period of time T1, determining a first configuration of said enclosure, adopting a first configuration of said enclosure based on configuration parameters according to data that links wind velocity to enclosure configuration; running a subsequent process for adopting a subsequent configuration, said subsequent process comprising measuring wind velocity and operating data over a period of time T2, processing the characteristics of measured values of wind velocity for a period of time T2, processing the characteristics of operating data for a period of time T2, comparing measured operating data to anticipated operating data and determining a second optimal configuration of said enclosure; and providing instructions to a control system to act on actuators to change to second configuration.

### BRIEF DESCRIPTION OF DRAWINGS

By way of example only, embodiments of methods and systems of the present disclosure are now described with reference to, and as shown in, the accompanying drawings, in which:
Fig. 1 illustrates a schematic of a wind turbine system of the present disclosure showing its basic elements;
Figs. 2a and 2b illustrate a schematic of the wind turbine system of Figure 1 showing a movement of the turbine-surrounding structure that surrounds the turbine from one position to another position at 90 degrees' rotation to accommodate change of wind direction;
Figs. 3a to 3e illustrate schematically an example of the changing geometry of the wind turbine system of Figure 1 as side panels can rotate to accommodate different wind directions;
Figs. 4a and 4b illustrate schematically an example of the changing geometry of the wind turbine system of Figure 1 as one of the side panels rotates over a range of angles;
Figs. 5a to 5d illustrate schematically an example of the changing geometry of the wind turbine system of Figure 1 as the turbine-surrounding structure rotates over a range of angles;
Figs. 6a to 6d illustrate schematically an example of the changing geometry of the wind turbine system of Figure 1 as side panels rotate and change in length (extend or retract) to facilitate changing wind direction and/or wind speed. Figs. 6a to 6d illustrate the improvement in the capture efficiency at angled winds;
Figs. 7a1 to 7c1 illustrate schematically an example of the changing geometry of the wind turbine system of Figure 1 as side panels rotate, without change in their length and, in doing so, move beyond a virtual rectangular envelope;

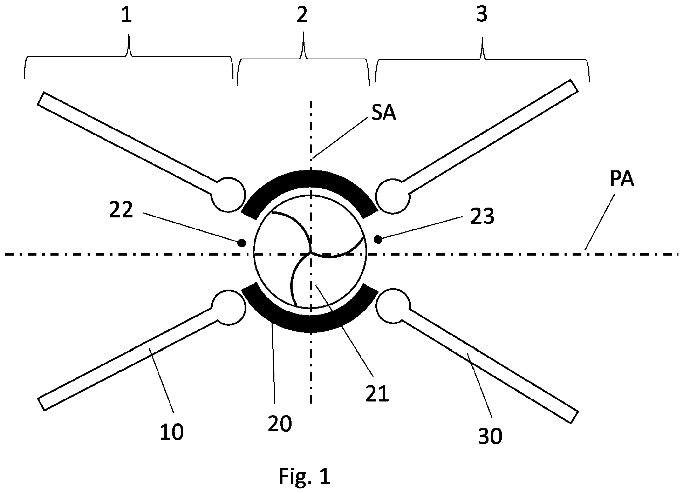

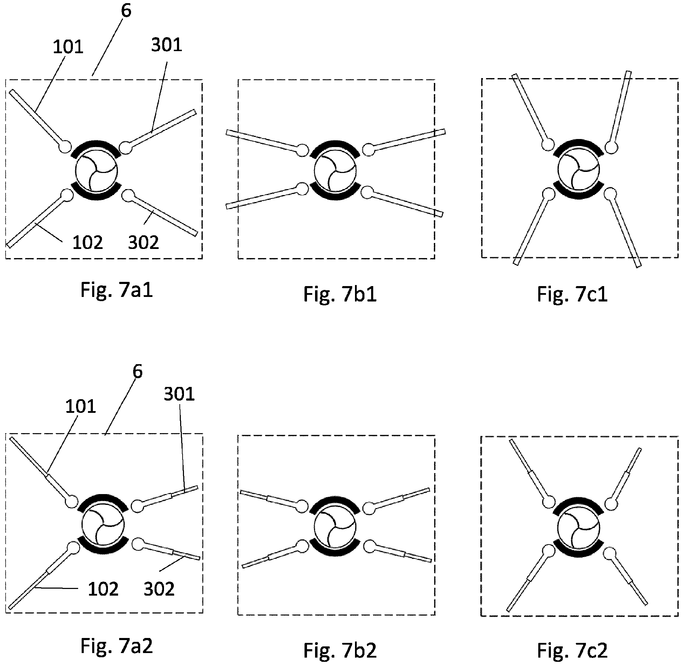

Figs. 7a2 to 7c2 illustrate schematically an example of the changing geometry of the wind turbine system of Figure 1 as side panels change in length (extend or retract) as they rotate in order to stay within a rectangular envelope;

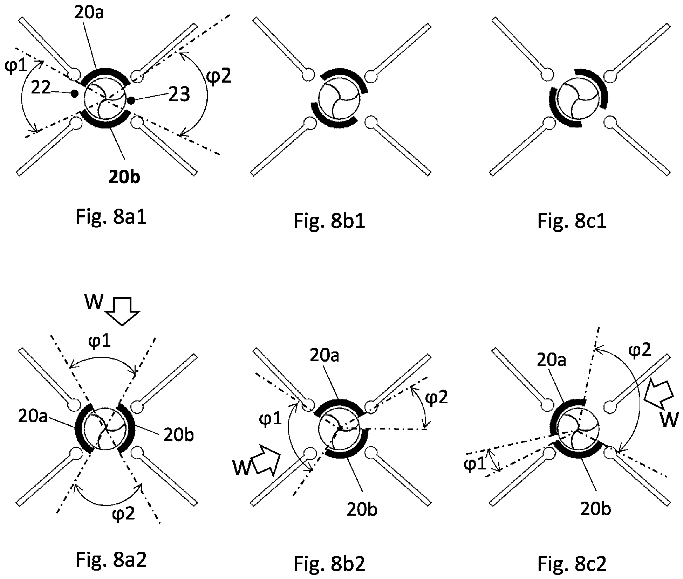

Figs. 8a1 to 8c1 illustrate schematically an example of the changing geometry of the wind turbine system of Figure 1 as the two members comprising the turbine-surrounding structure rotate while maintaining a fixed relative position of one relative to the other;
Figs. 8a2 to 8c2 illustrate schematically an example of the changing geometry of the wind turbine system of Figure 1 as the two members comprising the turbine-surrounding structure rotate while also changing the relative position of one relative to the other;

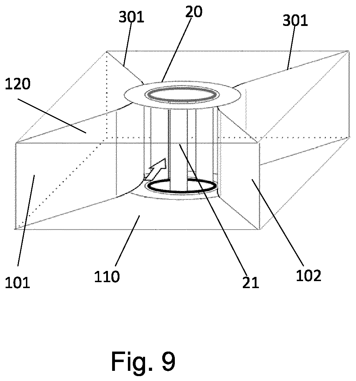

Fig. 9 illustrates an embodiment of a three-dimensional construction of parts of the wind turbine system of the present disclosure;

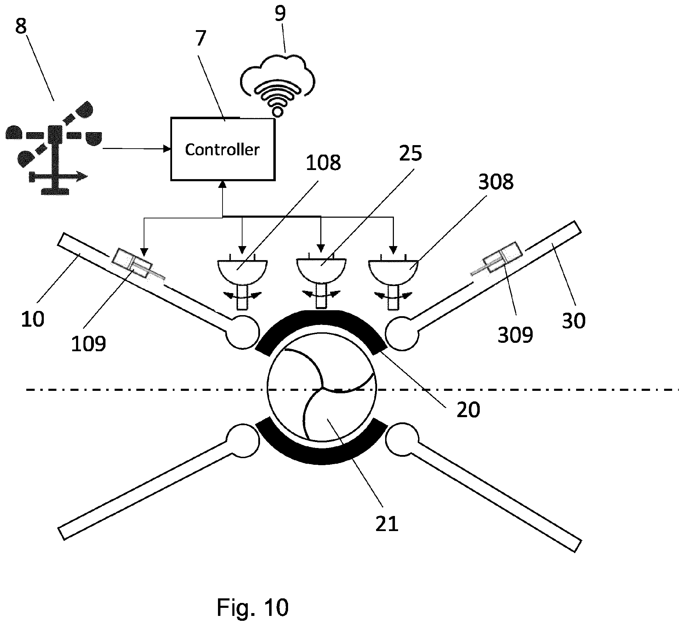

Fig. 10 illustrates one example of a wind turbine system having a controller and a weather station, with the controller controlling actuators for the movement of the system movable parts;

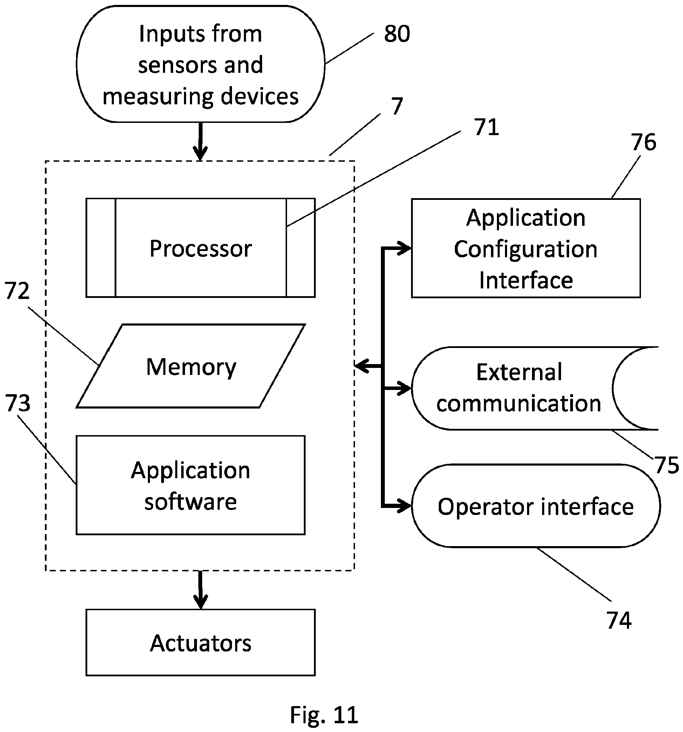

Fig. 11 illustrates the main parts of the controller of Figure 10;

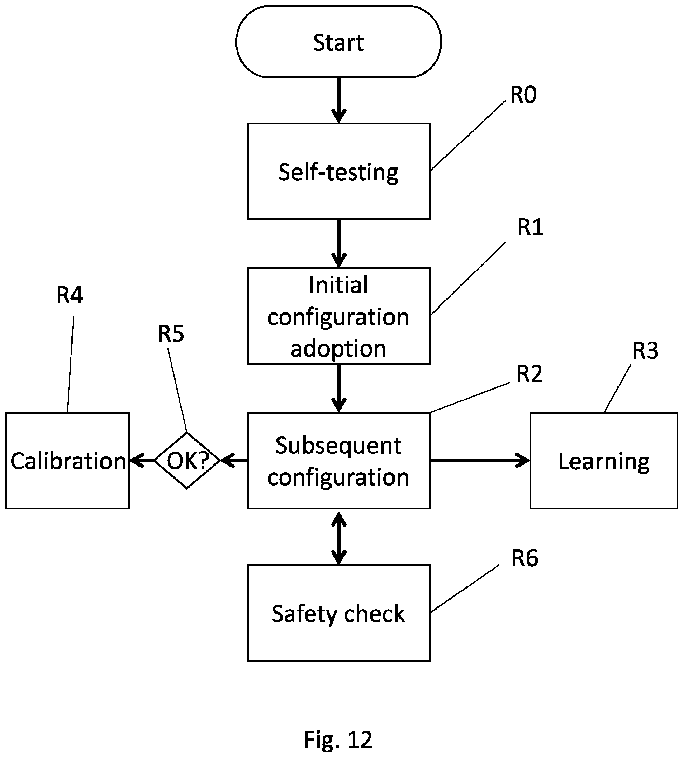

Fig. 12 is a schematic flowchart illustrating a method of controlling the wind turbine system of Figure 10;

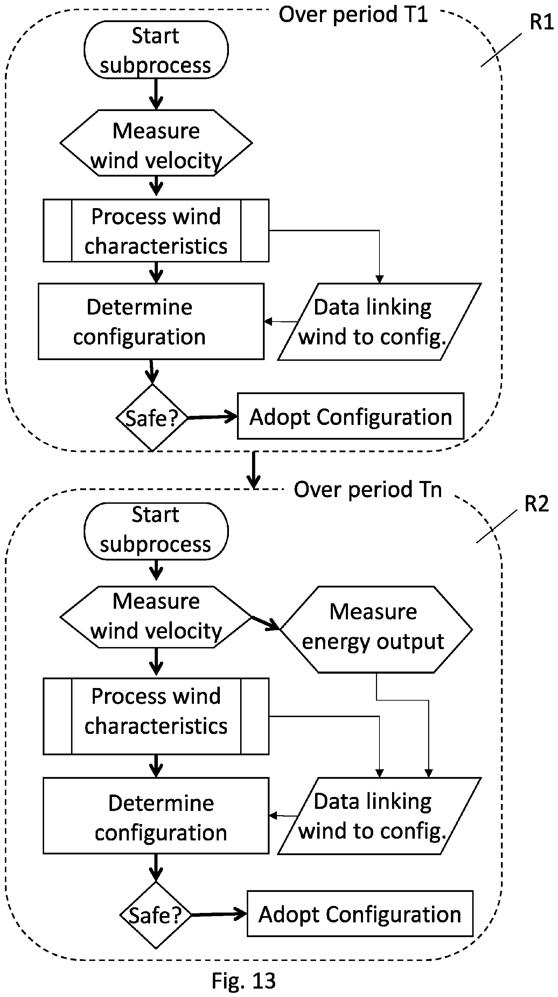

Fig. 13 is a schematic flowchart illustrating a further method of controlling the wind turbine system of Figure 10; and

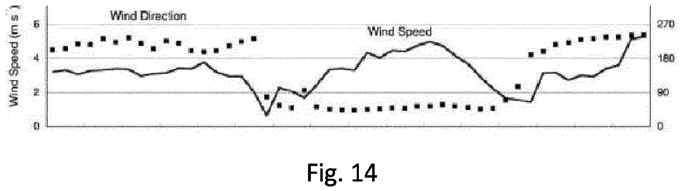

Figure 14 is a graph illustrating an example of changing wind speed and wind direction.

### DETAILED DESCRIPTION

The wind turbine system can beneficially adapt to changing wind conditions in order to maximise the total energy harvested over a period of time. The wind turbine system of the present disclosure has three main sections as illustrated schematically in Fig. 1: a convergent section 1, a wind turbine section 2 and a divergent section 3. The convergent section 1 comprises an entry and an exit, said entry having an area higher than said exit. The convergent section 1 has a first ratio being the entry area over the exit area. The first ratio of the entry area over the exit area is greater than 1.

The wind turbine section 2 is adjacent to the exit of the convergent section 1, and the wind turbine section 2 comprises at least one wind turbine 21. The at least one wind turbine 21 may rotate about a rotational axis, which may be aligned substantially vertically. The at least one wind turbine 21 may be a vertical axis turbine and may be a Gorlov type turbine. The at least one wind turbine 21 may comprise a generator for using the energy captured from the wind and generating an electrical power output. The at least one wind turbine 21 may capture energy from the wind by being operable to rotate when wind passes through the at least one wind turbine 21. The generator may convert the kinetic energy from rotation of the at least one wind turbine 21 into electrical power. The term "in use" as used herein may refer to the operation of the system when the wind turbine 21 is rotating about its rotational axis and providing power for a generator.

The divergent section 3, adjacent to the wind turbine section 2, also comprises an entry and an exit, the entry having an area lower than said exit. The entry of the divergent section 3 may be adjacent the wind turbine section 2. At least one of the convergent section 1 and the divergent section 3 comprises side panels 10, 30 extending away from the wind turbine section 2. In particular, at least one of the convergent section 1 and the divergent section 3 comprises a cross-section having four sides, each of said four sides comprising side panels 10, 30. The side panels 10, 30 can be modified in order to maximise the amount of energy harnessed within a time interval in accordance to wind direction and/or wind speed. Each of the convergent section 1 and divergent section 3 may comprise side panels 10, 30 and may comprise two side panels 10, 30 defining said convergent section 1 and divergent section 3. The side panels 10, 30 of each of the convergent section 1 and divergent section 3 may be modifiable in use, such as for maximising the amount of energy harnessed within a time interval in accordance with wind direction and/or wind speed.

The side panels 10, 30 may extend along a height substantially parallel to the rotational axis of the at least one wind turbine 21 and along a length in a direction perpendicular to and away from the rotational axis of the at least one wind turbine 21. The side panels 10, 30 may extend upstream and/or downstream of the at least one wind turbine 21 in a direction perpendicular to the rotational axis of the at least one wind turbine 21. The side panels 10, 30 may extend substantially along at least 50% or at least 75% or all of the height of the at least one wind turbine 21. The side panels 10, 30 may be at least partially flat and/or curved.

The side panels 10, 30 may be rotatable about a fixed pivot point and/or extendable and retractable to change in length. In other embodiments the modification comprises other changes of shape of the side panels 10, 30.

The side panels 10, 30 may be rotatable independently or in unison in accordance with wind conditions for achieving optimal system performance. The rotation of the side panels 10, 30 can be according to actual measurements of current wind conditions or in anticipation of mean wind direction over a future time period. The side panels 10, 30 may rotate to maintain an optimal inlet angle formed between side panels 10 of the convergent section 1 in relation to an outlet angle formed between side panels 30 of the divergent section 3. Modifying at least two of the side panels 10, 30 may comprise adjusting an opening angle between two side panels 10 of the convergent section 1 and/or two side panels 30 of the divergent section 3. Modifying the side panels 10, 30 may alternatively or additionally comprise extending or retracting the side panels 10, 30 to adjust in length, which may be the dimension of the side panels 10, 30 in a direction away from a rotational axis of the at least one wind turbine 21. A pivot axis of the or each pivot of the side panels 10, 30 may be parallel to the rotational axis of the at least one wind turbine 21.

The wind turbine section 2 comprises a turbine-surrounding structure 20 that at least partially surrounds the wind turbine 21. This turbine-surrounding structure 20 has openings 22, 23 for wind to pass from the convergent section 1, through the wind turbine section 2, and exit to the divergent section 3. The pivot points of the side panels 10, 30 maybe adjacent to the turbine-surrounding structure 20.

The turbine-surrounding structure 20 may comprise two openings 22, 23, each arranged on substantially opposing sides of the rotational axis of the at least one wind turbine 21. Wind may be directed from the convergent section 1, through a first opening 22 of the turbine-surrounding structure 20, through the at least wind turbine 21, through a second opening 23 of the turbine-surrounding structure 20 and subsequently though the divergent section 3.

The turbine-surrounding structure 20 may be mounted between the at least one wind turbine 21 and the side panels 10, 30. The turbine-surrounding structure 20 may be located downstream of side panels 10, 30 of the convergent section 1 and may be located between side panels 10, 30 of the convergent section 1 and the at least one wind turbine 21. The turbine-surrounding structure 20 may be located upstream of side panels 10, 30 of the divergent section 3 and may be located between the side panels 10, 30 of the divergent section 3 and the at least one wind turbine 21. In an embodiment wind from the convergent section 1 must pass through at least one opening 22 to enter the at least one wind turbine 21 and/or wind exiting the at least one wind turbine 21 must pass through at least one opening 23 to reach the divergent section 3.

The turbine-surrounding structure 20 may surround the at least one wind turbine 21 other than at the openings 22, 23 and may extend substantially around the circumference of the at least one wind turbine 21 other than at the openings 22, 23. The turbine-surrounding structure 20 may extend substantially along at least 50% or at least 75% or all of the height of the at least one wind turbine 21, the height being the length of the at least one wind turbine 21 along its rotational axis. The openings 22, 23 may extend along at least 50% or at least 75% or all of the height of the turbine-surrounding structure 20 and/or at least one wind turbine 21.

The system may be thought of as having a primary axis PA and a secondary axis SA as shown in Fig. 1. The primary axis PA may define the primary orientation of the system and the secondary axis SA may be essentially perpendicular to the primary axis PA. The primary axis PA may define the air flow direction from the convergent section 1, through the wind turbine section 2, to the divergent section 3 when the openings 22, 23 of the turbine-surrounding structure 20 are aligned to the primary axis PA. The primary and secondary axes PA, SA, may be in a plane perpendicular to the rotational axis of the wind turbine 21. The system may be installed to a fixed structure such as a roof of a building with the primary axis PA aligned to the prevailing wind direction according to the regional wind rose.

The orientation of the turbine-surrounding structure 20 is adjustable for accommodating changes in wind direction and/or wind speed. The turbine-surrounding structure 20 may be adjustable in use by being rotatable in use, such as by being rotatable around the at least one wind turbine 21 such as around the outer circumference thereof. The turbine-surrounding structure 20 may be rotatable for alignment of the openings 22, 23 with the wind direction. The turbine-surrounding structure 20 may be adjustable in use by (a) the openings 22, 23 being adjustable in position or orientation relative to the at least one wind turbine 21 and/or convergent and divergent sections 1, 3 and/or (b) the size of the openings 22, 23 being adjustable. The turbine-surrounding structure 20 may be supported on rails and may be able to rotate at least 90 degrees about a centre axis of said turbine-surrounding structure 20 or a rotational axis of the at least one wind turbine 21.

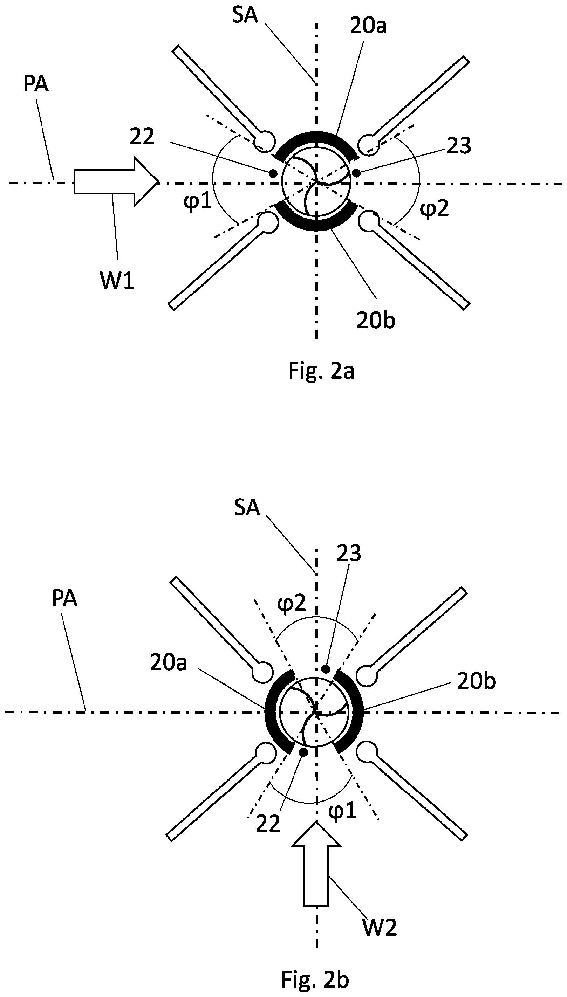

Figs. 2a and 2b illustrate a schematic of the system showing a movement, adjustment or rotation of the turbine-surrounding structure 20 that at least partially surrounds the wind turbine 21 from one position to another position at 90 degrees' rotation to accommodate change of wind direction. The side panels 10,30 of the convergent section 1 or the divergent section 3 may be stationery, and only the turbine-surrounding structure 20 may be rotating.

As shown in Figs. 2a and 2b, the turbine-surrounding structure 20 may comprise at least two walls 20a, 20b. The at least two walls 20a, 20b of turbine-surrounding structure 20 are separated by a first opening 22 and a second opening 23. The at least two walls 20a, 20b may extend substantially circumferentially around the at least one wind turbine 21 and may extend along a height parallel to the rotational axis of the at least one wind turbine 21. Each wall 20a, 20b may be formed as a partial tubular wall. The walls 20a, 20b may be connected and may rotate in unison so that the angles and/or sizes of the openings 22, 23 remain constant or the walls 20a, 20b can rotate independently so that the angles and/or sizes of the openings 22, 23 can vary depending on wind conditions in order to optimise system performance.

The turbine-surrounding structure 20 that surrounds the turbine 21 and its two walls 20a, 20b may have a concave shape (as seen from the turbine 21 side), may have a flat shape 21a, 21b and/or may have a convex shape 22a, 22b. The shape of the turbine-surrounding structure 20 is dependent on the type of turbine 21 itself and on the geometry of the walls 20a, 20b, 21a, 21b, 22a, 22b of the convergent and divergent sections 1, 3 and the side panels 101, 102, 301, 302 that they comprise of.

The size or width of the first and second openings 22, 23 may be defined by angles φ1 and φ2 respectively. Angles φ1 and φ2 are measured about the rotational axis of the at least one wind turbine 21 and are between the edges of the first and second openings 22, 23. The at least two walls 20a, 20b of turbine-surrounding structure 20 may be configured, such as by being part of a single structure or being linked together, so that the first opening 22 and second opening 23 are fixed so that the angles φ1 and φ2 remain constant. The turbine-surrounding structure 20 with its at least two walls 20a, 20b may rotate as the wind direction changes from direction W1 to direction W2.

Generally, and as shown by example in Figs. 2a and 2b, a change in wind direction of 90 degrees (for example about the rotational axis) may require a corresponding rotation of the turbine-surrounding structure 20. In some cases, a change of wind direction by more than 45 degrees may also render the rotation of the turbine-surrounding structure 20 a required system response. Initially the inlet opening 22 may be aligned with the primary axis PA (for example along wind direction W1 in Fig. 2a). Upon a rotation of 90 degrees of the turbine-surrounding structure 20, the inlet opening 22 of the system is aligned with the secondary axis SA of the system rather than the primary axis of the system PA. The turbine-surrounding structure 20 may be rotatable by at least 90 degrees about the rotational axis of the at least one wind turbine 21 and may be fully rotatable around 360 degrees. The turbine-surrounding structure 20 may be supported on rails and may be able to rotate at least 90 degrees about a centre axis of said turbine-surrounding structure 20 or a rotational axis of the at least one wind turbine 21.

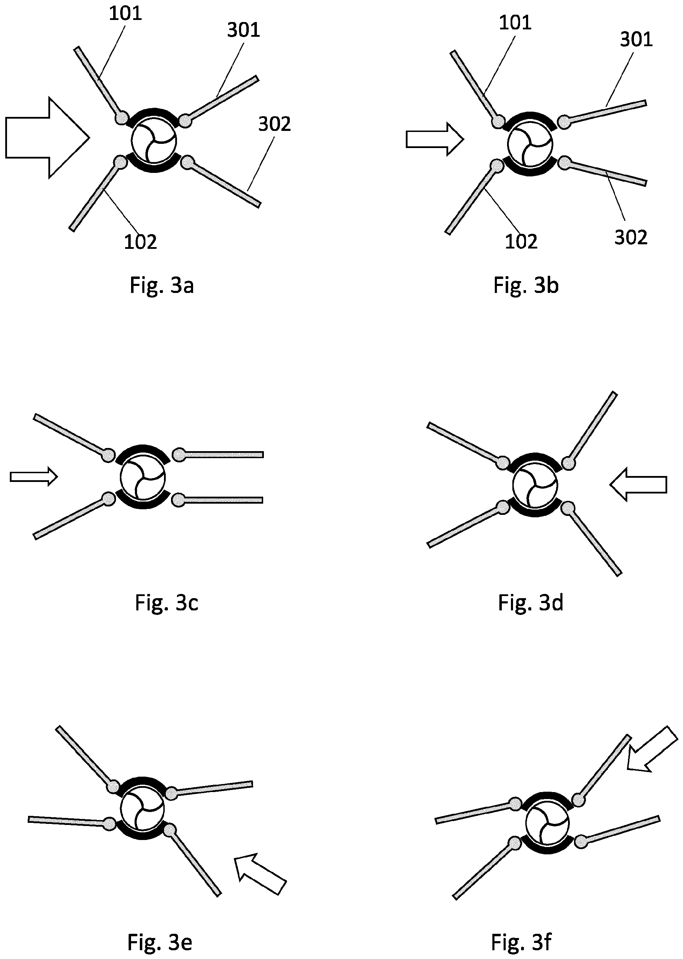

When the wind speed changes, the system may adapt by changing the opening of the side panels 101, 102 at the convergent section 1 which acts as the air inlet and/or the opening of the side panels 301, 302 at the divergent section 3 which acts as the air outlet. Figs. 3a to 3f show by means of example alternative configurations that the side panels 101, 102, 301, 302 can take as wind changes speed and direction, and the system adapts to the changing wind conditions to optimize performance. Performance is measured as the total energy harvested by the system over a given period of time.

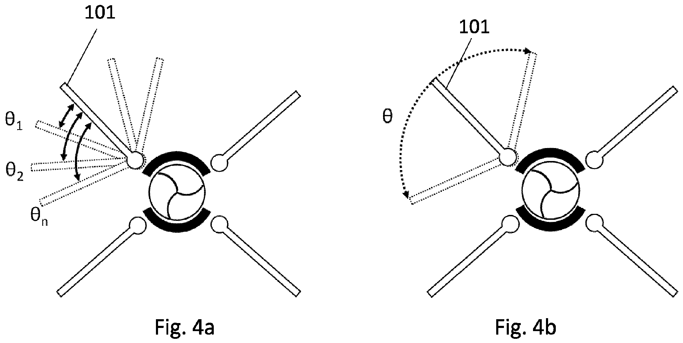

Figs. 4a and 4b illustrate schematically an example of the changing geometry of the system as one of the side panels 101 rotates over a range of angles. By reference to one side panel 101, Fig. 4a illustrates schematically, by means of an example, a change of relative position by angle Θ1, Θ1, Θn, with reference to an initial position. In general, any one of the four side panels 101, 102, 301, 302, can rotate over an allowable range of angles Θ, as shown by means of an example with reference to a side panel 101 in Fig. 4b. The rotation may be continuous or stepwise at specific angles.

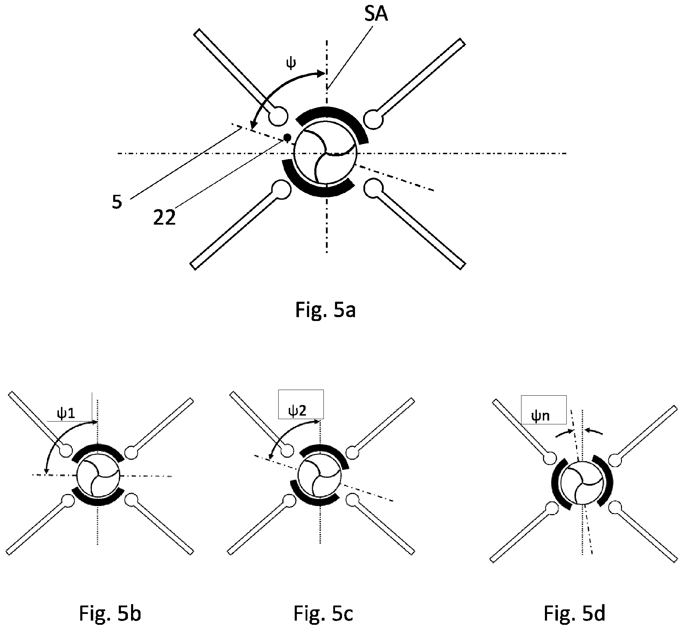

Figs. 5a to 5d illustrate schematically an example of the changing geometry of the system as the turbine-surrounding structure 20 rotates over a range of angles. In a similar way as the side panels 101, 102, 301, 302 shown in Figs. 3a to 3f and 4a to 4b, the turbine-surrounding structure 20 can also rotate to accommodate changing wind direction. Fig. 5a shows the rotation of the turbine-surrounding structure 20 at an angle ψ as measured between the airflow axis 5 and the secondary axis SA of the system. Figs. 5b to 5d show the turbine-surrounding structure 20 at different rotational angles ψ1, ψ2, ψn. The rotation may be continuous or stepwise at specific angles.

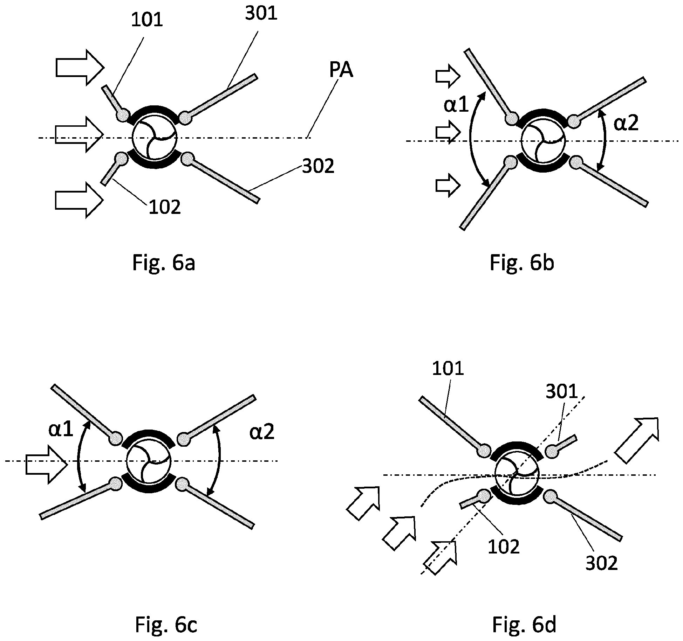

Figs. 6a to 6d illustrate schematically an example of the changing geometry of the system as side panels 101, 102, 301, 302 rotate and change in length (extend or retract) to facilitate changing wind direction and/or wind speed. Fig. 6a shows the side panels 101, 102 rotating or changing in length. Fig. 6a shows an example where the wind direction is aligned with the system primary axis PA and wind amplitude is high. The side panels 101, 102 of the convergent section 1 contract to reduce in length and hence reduce their wind capture area.

Fig. 6b shows an example where the wind direction is aligned with the system primary axis PA and wind amplitude is low. In this case the side panels 101, 102 of the convergent section 1 extend to increase in length and hence increase their wind capture area. The example shown in Fig. 6b shows side panels 101, 102 at the inlet or convergent section 1 being at one opening angle α1 and the side panels 301, 302 at the outlet or divergent section 3 being at a different opening angle α2 from the pane. The opening angle α1, α2 may be the angle between the side panels 101, 102, 301 302 about the rotational axis of the at least one wind turbine 21.

The example shown in Fig. 6c shows side panels 101, 102 at the inlet or convergent section 1 being at one opening angle α1 and the side panels 301, 302 at the outlet or divergent section 3 being at an opening angle α2 from the pane where α1 = α2. The opening angles α1 and α2 are adjusted according to wind speeds and wind directions in order to create optimal conditions for the rotation of the at least one wind turbine 21 and thus harvest maximum power.

Fig. 6d shows another example where at the convergent section 1 (inlet) one side panel 101 is extended while the other side panel 102 is retracted, and similarly at the divergent section 3 (outlet) one side panel 302 is extended while the other side panel 301 is retracted to accommodate a direction of wind that is at an oblique angle to the primary system axis PA.

The length of the side panels 101, 102, 301, 302 can also be adjustable in order to keep the edge of the panels within a certain envelope 6, envelope enclosure or operational envelope. The system may be operable within the operational envelope 6 by the side panels 101, 102, 301, 302 being configured to only be extendable and/or pivotable within the operational envelope 6.

Figs. 7a1 to 7c1 illustrate schematically an example of the changing geometry of the system as side panels 101, 102, 301, 302 rotates, without a change in length and, in doing so, the edges of the side panels 101, 102, 301, 302 move beyond a virtual rectangular envelope 6. Please note that in the illustrations, the envelope 6 is shown in a preferred embodiment as a rectangle. It may be possible in other cases to have an envelope 6 of different shape.

A virtual envelope 6 is referred to, but the envelope 6 may be a physical construction. The system may comprise a housing and the housing may define an operational envelope 6 within which the side panels 101, 102, 301, 302 operate. The at least one wind turbine 21, turbine-surrounding structure 20 and side panels 101, 102, 301, 302 may be mounted in and/or to the housing. Such physical construction of an envelope 6 serves an important function regarding safety, by preventing people, animals, and birds to enter the system and reach the turbine 21 where they may get injured by the rotating turbine blades. The envelope 6 may also serve an aesthetics appearance function. Figs. 7a2 to 7c2 illustrate schematically an example of the changing geometry of the system as side panels 101, 102, 301, 302 rotate, and at the same time retract to reduce their length so that the edge of the side panels 101,102,301,302 stays within the envelope 6. If the envelope 6 is a physical structure, the angle of rotation of the side panels 101, 102, 301, 302 must be limited so that they do not interfere and impact the envelope 6.

In Figs. 2a and 2b, the first opening 22 and second opening 23 are fixed so that the angles φ1, φ2 (i.e. between walls of the turbine-surrounding structure 20) and the size of the openings 22, 23 remain constant. Alternatively the angles φ1, φ2 can change according to wind speed and/or direction. The turbine-surrounding structure 20 may be operable to adjust angles φ1, φ2 defining the size of the openings 22, 23 according to wind speed and/or direction.

The sequence in Figs. 8a1 to 8c1 illustrate schematically an example of the changing geometry of the system as the two members or walls 20a, 20b of the turbine-surrounding structure 20 rotate while maintaining a fixed relative position of one relative to the other so that angles φ1, φ2 remain constant. In contrast, Figs. 8a2 to 8c2 illustrate schematically an example of the changing geometry of the system as the two members or walls 20a, 20b of the turbine-surrounding structure 20 rotate while also changing the relative position of one relative to the other. In doing so the angles φ1, φ2 change and one increases while the other decreases. The members 20a, 20b are part of a single or unitary turbine-surrounding structure 20 and move together as that structure 20 rotates, as characteristically shown by means of an example in Figs. 8a1 to 8c1. Alternatively the walls 20a, 20b are separate structures, actuated independently and rotate in a way that results in the angles φ1, φ2 changing as each of the walls 20a, 20b rotate, as characteristically shown by means of an example in Figs. 8a2 to 8c2.

Fig. 9 illustrates one example of a three-dimensional construction of an embodiment the wind turbine system of this disclosure. On either side of the side panels 101, 102, 301, 302, a floor 110 and a roof 120 are formed. The roof 120 and the floor 110 can take many alternative geometries. Fig. 9 shows by example one embodiment where roof 120 and floor 110 are flat structures. The housing may comprise the roof 120 and floor 110. The turbine-surrounding structure 20, at least one wind turbine 21, convergent section 1, divergent section 3 and side panels 101, 102, 301, 302 may be mounted between the roof 120 and the floor 110. The edges of the side panels 101, 102, 301, 302 adjacent to the roof 120 and floor 110 may be substantially flush therewith such that wind substantially cannot flow therebetween.

The system responds to changing wind conditions.

Figure 10 illustrated schematically a wind turbine system 200 of the present disclosure. In particular, the wind turbine system 200 of the illustrated embodiment comprises a controller 7 in communication with a weather station 8, actuators 108, 109, 308, 309, 25 and sensors 81. The controller 7 may also be connected to an external network or cloud 9 by an external communication interface 75 for communication to a remote server or some other remote control and processing device. The method of the present disclosure may be substantially performed or implemented by or at the controller 7, although some steps, such as the generation of wind velocity data and existing configuration data (see below), may be performed on a remote server or the like.

The controller 7 is connected to the actuators 108, 109, 308, 309, 25 and controls these actuators 108, 109, 308, 309, 25 to adapt the geometry of the system 200 in order to achieve optimal performance. The system 200 may comprise first panel actuators 108, 308 for controlling the rotation or pivoting of the side panels 101, 102, 301, 302. The system 200 may comprise second panel actuators 109, 309 for controlling the extension or retraction in length of the side panels 101, 102, 301, 302. The system 200 may comprise structure actuators 25 for controlling the rotation of the turbine-surrounding structure 20.

The sensors 81 may be for measuring operating conditions of the wind turbine system 200. At least one sensor 81 may measure the position and/or configuration of the turbine-surrounding structure 20 (e.g. its angle of rotation) and/or side panels 10, 30 (e.g. their angle of rotation and/or length). At least one sensor 81 may measure the power output, rotational speed, torque and the like of the at least one wind turbine 21. At least one sensor 81 may measure the forces on, noise of and/or vibrations of components of the wind turbine system 200.

The weather station 8 or wind measuring station may measure wind speed and direction at the wind turbine system 200. In particular, the weather station 8 may be mounted in and/or on the housing of the wind turbine system 200 and/or may be configured adjacent to or on at least the same building as the at least one wind turbine 21.

As illustrated further in Figure 11, the controller 7 may comprise a processor 71 and a memory 72. Application software 73 may be stored on the memory 72 and run by the processor 71. The system 200 may comprise an application configuration interface 76, external communication interface 75 and an operator interface 74 connected to the controller 7.

The processor 71 may be used to determine optimal system 200 configuration and may calculate anticipated energy harvested over a period of time. The memory 72 may comprise both volatile memory (RAM) and permanent memory (solid state memory or hard disk drive). The memory 72 may store the application software 73, models of the behaviour of the system 200, equations, algorithms, look-up tables, and data collected and generated by the processor 71. The application software 73 runs the algorithms, decision processes, and manages communications and may be for running an algorithm to determine optimal system 200 configuration under different wind conditions.

Communications may include the operator interface 74, external communication interface 75 and application configuration interface 76. The operator interface 74 may be the means by which an operator may communicate with the system 200 either locally or remotely. For example, in one embodiment, local communication could take place via a touch screen or a screen and keyboard and mouse. The operator interface 74 may be used in those cases where an operator may want to check system 200 performance, carry out maintenance operations, or change settings and operational parameters. The external communication interface 75 may enable communication between the system 200 and a remote server for example via the external network (e.g. a wireless network) 9 or otherwise. Such communication may serve to exchange data on system 200 status, system 200 performance or on system 200 inputs. Such system 200 inputs may be weather data from the weather station 8 or inputs from the sensors 81. The system 200 may receive weather forecasts from the external network 9.

The application configuration interface 76 may be used to inform the controller 7 about the hardware configuration of the system 200, namely the physical structure and geometry including components such as types of actuators 109, 309, 108, 308, 25, side panels 10, 30, the turbine-surrounding structure 20 and the clearance between the turbine-surrounding structure 20 and the at least one wind turbine 21.

The controller 7 may be configured to make decisions by combining current measurements and historical data. The objective sought by the algorithm run by the controller 7 is to maximise the energy harvested over a time period. This time period can comprise minutes, hours and/or days and the exact time period is determined dynamically based on measured and forecasted weather data and historical data that includes weather conditions, power efficiency and energy yield.

The controller 7 is connected via wireless connection to the internet, the external network 9 and via the external network 9 to remote server or other devices. Other devices may include for example a smart phone of a responsible person. It is possible for controller 7 decisions to be externally overwritten.

The controller 7 takes decisions by combining current measurements and historical data. Historical data may concern wind speed and direction as well as instantaneous electrical power produced by the turbine 21. The controller 7 takes decisions also considering system 200 stability in view of measured or anticipated perturbations (changes are relatively high frequency) of the wind speed and direction.

Figure 12 is a schematic flowchart illustrating the top-level routines used in the method of controlling the wind turbine system 200. The routines, which may be referred to as processes or methods, comprise a first configuration adoption routine R1 and a second or subsequent configuration adoption routine R2 and may comprise at least one of a self-testing routine R0, a learning routine R3, a calibration routine R4, a calibration assessment routine R5 and/or a safety check routine R6.

Figure 13 is a further schematic flowchart illustrating the method of controlling the wind turbine system 200 and particularly the first and second configuration adoption routines R1, R2. The first configuration adoption routine R1 comprises determining and implementing a first configuration of the turbine-surrounding structure 20 and/or side panels 10, 30. The second configuration adoption routine R2 comprises assessing wind velocity and operating conditions in the first configuration and, based upon such an assessment, subsequently determining and implementing a second configuration of the turbine-surrounding structure 20 and/or side panels 10, 30. The second configuration adoption routine R2 may be run repeatedly and hence may be referred to as a subsequent configuration adoption routine Rn.

The configuration may refer to the angles of the side panels 10, 30 and/or the length of each of the side panels 10, 30. The configuration may refer to the angle of the central turbine-surrounding structure 20 when this structure is a single body or the angles φ1 and φ2 of the two walls 20a, 20b of the turbine-surrounding structure 20 when the two walls 20a, 20b are separate bodies controlled independently.

In the first configuration routine R1 a determination is made, based upon first wind velocity data, of a first configuration of the turbine-surrounding structure 20 and/or side panels 10, 30 for wind to pass through the convergent section 1 and at least one of the openings 22, 23 of the turbine-surrounding structure 20 to the at least one wind turbine 21. The first configuration routine R1 also comprises operating at least one of the actuators 108, 109, 308, 309, 25 to configure the turbine-surrounding structure 20 and/or side panels 10, 30 in the first configuration.

The first configuration may be determined based upon the first wind velocity data and existing configuration data. The existing configuration data may link stored optimal (i.e. for maximising the output of the at least one wind turbine 21) configurations of the turbine-surrounding structure 20 and side panels 10, 30 with wind velocities. Therefore the first configuration may be that which the controller 7 determines to be optimal based on the existing configuration data that linking configuration to wind velocities. The existing configuration data may be stored in a reference look-up table or may be dynamically generated by a simulation algorithm run by the application software 73.

The method may comprise determining the first wind velocity data by measuring the wind velocity whilst the wind turbine system 200 is in an initial configuration (i.e. prior to the first configuration) for a first time period T1. The wind velocity may be measured by the weather station 8 and the controller 7 may process the characteristics of the measured wind velocity for the first time period T1 to determine the first wind velocity data. It will be understood that the first configuration adopted may be sub-optimal because wind velocities are never completely steady, even for short periods of time. Hence over the first time period T1, wind velocity will inevitably have small variations. Wind velocity comprises speed and direction, and in any period of time both speed and direction may be changing. Figure 13 illustrates an example of how wind speed and wind direction can change. In an urban environment such changes may be frequent. The first time period T1 is no more than about five minutes and/or is at least about 30 seconds. The first wind velocity data may be calculated based upon the wind velocity (speed and direction) at multiple measurements at a sampling rate. The wind velocity may not be averaged for the entire period because fluctuations may be important and averaging may lose this information. Therefore measurement points and standard deviation may be important. The averaging may then only be done within smaller time periods tn, wherein T1=SUM(t1...tn).

After the first configuration is adopted, the second configuration adoption routine R2 starts. During the second configuration adoption routine R2, the wind turbine system 200 is already at a configuration that is not far from optimal. However, the second configuration adoption routine R2 may be for further optimising the configuration to further maximise the power output of the at least one wind turbine 21. Thus the second configuration may be more optimal for harvesting energy than the first configuration. The process starts again with measurement of wind velocity. The controller 7 processes wind characteristics and at the same time measures energy harvested by the at least one wind turbine 21. The application software 73 determines a new optimal second configuration, and the controller 7 instructs the actuators 108, 109, 308, 309, 25 to adopt this new configuration.

The second configuration adoption routine R2 therefore comprises determining second wind velocity data and measured operating condition data indicative of operating conditions of the wind turbine system 200 whilst the turbine-surrounding structure 20 and/or side panels 10, 30 are in the first configuration. The second wind velocity data and measured operating condition data by be determined by measuring the wind velocity at the wind turbine system 200 and operating conditions of the wind turbine system 200 over a second time period T2.

The second wind velocity data is determined in a similar manner to the first wind velocity data. The method may comprise determining the second wind velocity data by measuring the wind velocity whilst the wind turbine system 200 is in the first configuration for the second time period T2. The wind velocity may be measured by the weather station 8 and the controller 7 may process the characteristics of the measured wind velocity for the second time period T2 to determine the second wind velocity data.

The second time period T2 may be shorter than T1 and may not be fixed. T2, and the subsequent time period Tn for subsequent configuration adoption routines Rn, may be calculated by the application software 73 based on the change of wind speed and wind direction values over smaller time steps Tx. 3. The time period T2 may be determined based on the change of average values and standard deviation for smaller time steps Tx. The time steps Tx may be in the range of about 10 seconds to about 60 seconds. Wind speed and wind direction values may be taken as averages in the interval of each time step Tx. For the determination of T2, the rate of change of average wind speed and average wind direction over time step Tx may be calculated by taking first and second derivative of these average values. The determination of T2 may be based on heuristics that consider rate of change of wind speed and the rate of change of wind direction as average values for each of time steps Tx. Wind speed and wind direction as values have different weights in the heuristics for calculating T2. Each execution of the second and subsequent configuration routines R2, Rn is for a different time period Tn, so these time periods are then noted as T2, T3, T4...Tn.

The operating conditions may be measured by the sensors 81 and the controller 7 may determine the measured operating condition data based upon the output from the sensors 81. The operating condition data may relate to the performance, energy harvested and/or power output of the at least one wind turbine 21. The operating condition data may comprise at least one of geometric parameters of moveable parts of the wind turbine system 200 (such as the turbine-surrounding structure 20 and/or side panels 10, 30), the energy harvested over a time step Tn or Tx, instantaneous electrical power from the at least one wind turbine 21, rotational speed of the at least one wind turbine 21, torque on the at least one wind turbine 21, forces on one or more components of the wind turbine system 200 (such as the turbine-surrounding structure 20 and/or side panels 10, 30), vibrations on one or more parts of wind turbine system 200 (such as the turbine-surrounding structure 20 and/or side panels 10, 30) and/or noise from the and/or parts of the wind turbine system 200.

The second configuration adoption routine R2 further comprises determining, based upon the second wind velocity data and measured operating condition data, a second configuration of the turbine-surrounding structure 20 and/or side panels 10, 30 for wind to pass through the convergent section 1 and at least one of the openings 22, 23 of the turbine-surrounding structure 20 to the at least one wind turbine 21 such that the at least one wind turbine 21 generates power. The second configuration is an optimum configuration.

The second configuration may be determined by comparing the measured operating condition data with anticipated operating condition data. The anticipated operating condition data may indicate the anticipated or predicted operating conditions (such as power output or energy harvested) based upon the wind velocity data. The difference between the measured and anticipated operating condition data may be used as feedback by the controller 7 to determine the second configuration. In particular, the energy harvested by the system 200 as measured over the time period T2 may be compared with the energy predicted to be harvested over the time period T2. The difference between the measured and anticipated energy harvested (i.e. predicted vs actual) may be used as feedback by the controller 7 to compute the second configuration. The anticipated operating condition data is available data stored in the memory 72. The anticipated operating condition data may be in the form of algorithm or look-up table. The anticipated operating condition data stored in the memory 72 may be updated after adoption of second configuration (which is a more optimised configuration). Such updating is not strictly necessary though and could happen offline for example.

The second configuration adoption routine R2 further comprises operating at least one of the actuators 108, 109, 308, 309, 25 to configure the turbine-surrounding structure 20 and/or side panels 10, 30 in the second configuration.

One of the objectives of the control method is to achieve maximum energy harvested over a long period of time of several hours or even days, without causing system 200 instabilities or very frequent changes in configuration. It is understood that for system 200 configuration to change, activation of actuators 108, 109, 308, 309, 25 and movement of parts takes some time, and generally such change should not take place many times per minute. The subsequent configuration adoption routine Rn, which is the same as the second configuration adoption routine R2, is repeated continuously to provide adjustments to the configuration of the wind-turbine system 200 as wind velocity changes.

In the learning routine R3 the existing configuration data may be updated during the execution of the second and subsequent configuration adoption routines R2, Rn. The adjustments made through the running of the second and subsequent configuration adoption routines R2, Rn and the measurements of energy harvested in each of time periods Tn, may be used by the learning routine R3 so that data that links wind conditions to the configuration are updated.

The method of the present disclosure may comprise, by the learning routine, measuring operating conditions in the second or subsequent configuration to generate measured operating condition data and comparing the measured operating condition data to the anticipated operating condition data in the second configuration. The controller 7 then accordingly updates the parameters of the simulation algorithm for generating the existing configuration data and/or anticipated operating condition data and/or look-up table forming the existing configuration data and/or anticipated operating condition data stored in the memory 72 of the controller 7. The updating can happen via an Al algorithm by the system itself in the learning routine. Updating can also take place offline, by a separate process where data is processed offline and the update considers perhaps other factors. Then this updated data may be uploaded manually.

The method may comprise initiating a calibration routine R4 when it is determined that wind speed is below a wind speed threshold and/or power generation by the at least one wind turbine 21 is below a power threshold. The change of system 200 configuration depends on the activation of actuators 108, 109, 308, 309, 25 and may depend upon input from the sensors 81 such as the of position feedback by measurement of position signal by position sensors 81 indicating the position of the turbine-surrounding structure 20, side panels 10, 30 and/or at least one wind turbine 21. It is possible that errors may accumulate. Therefore, the method may comprise implementing the calibration routine R4 to calibrate the sensed configuration of the turbine-surrounding structure 20 (e.g. its angle) and/or side panels 10, 30 (e.g. the angle and/or length).

This cannot practically happen when there is strong wind or when the at least one wind turbine 21 is producing good power from the wind. Therefore, prior to implementing the calibration routine R4, the method may comprise implementing the calibration assessment routine R5 to assess whether conditions are favourable for the calibration routine R4 to take place. The calibration assessment routine R5 may be configured to determine if wind speed is below a wind speed threshold and if power generated by the turbine is below a power threshold. In general, if there is very little wind the turbine is not rotating or is rotating at very low RPMs then calibration may be allowed.

In some many cases it may be preferred to sacrifice some performance in terms of energy harvested in order to safeguard the stability of the system 200. Therefore, prior to operating the actuators 108, 109, 308, 309, 25 to change configuration, the method may comprise implementing the safety check routine R6 to assess safety before a new configuration is adopted. For example, if operating conditions are likely to exceed defined safety limits based on the standard deviation of wind velocity over a time period, then the new configuration is not adopted and an alternative configuration is compiled even at a lower energy yield.

The safety check routine R6 may be integrated into the first, second and subsequent configuration adoption routines R1, R2 Rn. Hence determining the first and/or second configuration may comprise determining, based upon the first and/or second wind velocity data and measured operating condition data, an optimum configuration of the turbine-surrounding structure 20 and/or side panels 10, 30 and determining whether at least one operating condition of the wind turbine system 200 is likely to or will exceed at least one safety limit. Such a determination may be made by a safety simulation implemented by the application software 73 and/or associated simulated data. If the at least one safety limit is not likely to or will not be exceeded in the optimum configuration then the optimum configuration may be set as the second configuration. However, if the at least one safety limit is likely to or will be exceeded in the optimum configuration, a safe configuration may be determined in which the at least one safety limit is not likely to or will not be exceeded. Thus the safe configuration may be set as the second configuration.

By "likely to" it is meant that the controller 7 determines that this is an at least 50% probability of at least one safety limit being exceeded.

In the safety check routine R6 the at least one operating condition may comprise a rotational speed of the at least one wind turbine 21, a torque on the at least one wind turbine 21, a force on one or more components of the wind turbine system 200 and/or a vibration of one or more components of the wind turbine system 200. Correspondingly the at least one safety limit may comprise a maximum rotational speed, a maximum torque, a maximum force and/or a maximum vibration respectively.

Determining whether at least one operating condition of the wind turbine system 200 is likely to exceed at least one safety limit may be based upon the standard deviation of wind velocity over a time period, simulated data linking at least one operating condition with wind velocity and/or absolute values of wind speed and standard deviation of wind speed and wind direction.

The safety check routine R6 may also run continuously to determine if current operating conditions may risk exceeding the safety limits and hence may result in the rerunning of the second or subsequent configuration adoption routine R2, Rn to determine a new configuration that can be within acceptable safety limits.

Adoption of alternative configurations of the wind turbine system 200 is achieved through the actuators 108, 109, 308, 309, 25 that act to change angle and/or length of side panels 10, 30 and angle of the turbine-surrounding structure 20. For accurate prediction of behaviour by the simulation run by the application software configuration, inputs are provided via the application configuration interface 76 to define parameters, which may be physical parameters, of the wind turbine system 200, such as a clearance gap between turbine-surrounding structure 20 and at least one wind turbine 21. The system configuration may be defined so that the system in emulation mode can generate reference data. The anticipated operating condition data in the memory 72 may be derived from the physical parameters, such as during the emulation mode. The controller 7 may therefore further comprise an application configuration interface 76 and the method may comprise, such as upon installation of the wind turbine system 200, providing inputs to the application configuration interface 76 to define parameters of the wind turbine system 200. The anticipated operating condition data may be determined based upon the defined parameters. The exact configuration of the system 200 may be defined so that correct system 200 behaviour can be predicted by the application software 73.

When the rotational speed of the at least one wind turbine 21 is essentially zero, the first configuration may not be an optimum configuration and may instead be a configuration that is most helpful to start the rotation of at least one wind turbine 21, i.e. even if the first configuration is not optimal for maximising power output from the at least one wind turbine 21.

The change of configuration may be defined in two levels. The first level of adjustment may be the amendment of the angle and length of the side panels 10, 30. The second level of adjustment may be the rotation of the turbine-surrounding structure 20. The first level adjustment may be implemented before the second level adjustment is implemented. Thus the angle and/or length of the side panels 10, 30 may be adjusted before the adjustment of the angle of the turbine-surrounding structure 20.

## Claims

1. A method of operating a wind turbine system (200), the wind turbine system (200) comprising:
a convergent section (1), a divergent section (3) and a wind turbine section (2) located between the convergent section (1) and the divergent section (3), wherein:
the wind turbine section (2) comprises at least one wind turbine (21) and an adjustable turbine-surrounding structure (20) that at least partially surrounds the at least one wind turbine (21), the turbine-surrounding structure (20) having openings (22, 23) configurable for wind to pass from the convergent section (1), through the wind turbine section (2) and to the divergent section (3); and
at least one of the convergent and divergent sections (1) comprises adjustable side panels (10, 30) extending away from the wind turbine section (2);
actuators (25, 108, 109, 308, 309) for controlling the configuration of the turbine-surrounding structure (20) and side panels (10); and
a controller (7) for controlling the actuators (25, 108, 109, 308, 309);
wherein the method comprises:
determining, based upon first wind velocity data, a first configuration of the turbine-surrounding structure (20) and/or side panels (10, 30) for wind to pass through the convergent section (1) and at least one of the openings (22, 23) of the turbine-surrounding structure (20) to the at least one wind turbine (21);
operating, by the controller (7), at least one of the actuators (25, 108, 109, 308, 309) to configure the turbine-surrounding structure (20) and/or side panels (10, 30) in the first configuration;
determining second wind velocity data and measured operating condition data indicative of operating conditions of the wind turbine system (200) whilst the turbine-surrounding structure (20) and/or side panels (10, 30) are in the first configuration;
determining, based upon the second wind velocity data and measured operating condition data, a second configuration of the turbine-surrounding structure (20) and/or side panels (10, 30) for wind to pass through the convergent section (1) and at least one of the openings (22, 23) of the turbine-surrounding structure (20) to the at least one wind turbine (21) such that the at least one wind turbine (21) generates power; and
operating, by the controller (7), at least one of the actuators (25, 108, 109, 308, 309) to configure the turbine-surrounding structure (20) and/or side panels (10, 30) in the second configuration.

2. A method as claimed in claim 1 wherein the first configuration is determined based upon the first wind velocity data and existing configuration data, the existing configuration data linking wind velocities with configurations of the turbine-surrounding structure (20) and side panels (10, 30).

3. A method as claimed in claim 1 or claim 2 further comprising determining the first wind velocity data by measuring the wind velocity at the wind turbine system (200) for a first time period.

4. A method as claimed in any one of the preceding claims further comprising determining the second wind velocity data and measured operating condition data by measuring the wind velocity at the wind turbine system (200) and operating conditions of the wind turbine system (200) over a second time period T2.

5. A method as claimed in any one of the preceding claims wherein the second configuration is determined based upon the second wind velocity data and measured operating condition data by comparing the measured operating condition data with anticipated operating condition data.

6. A method as claimed in any one of the preceding claims, wherein determining the second configuration comprises:
determining, based upon the second wind velocity data and measured operating condition data, an optimum configuration of the turbine-surrounding structure (20) and/or side panels (10, 30) for maximising the power output of the at least one wind turbine (21);
determining whether at least one operating condition of the wind turbine system (200) is likely to or will exceed at least one safety limit in the optimum configuration; and
if the at least one safety limit is not likely to or will not be exceeded setting the optimum configuration as the second configuration; or
if the at least one safety limit is likely to or will be exceeded determining a safe configuration in which the at least one safety limit is not likely to or will not be exceeded and setting the safe configuration as the second configuration.

7. A method as claimed in claim 6 wherein the at least one operating condition comprises a rotational speed of the at least one wind turbine (21), a torque on the at least one wind turbine (21), a force on one or more components of the wind turbine system (200), a vibration of one or more components of the wind turbine system (200) and the at least one safety limit comprises a maximum rotational speed, a maximum torque, a maximum force and/or a maximum vibration respectively.

8. A method as claimed in claim 6 or claim 7 wherein determining whether at least one operating condition of the wind turbine system (200) is likely to exceed at least one safety limit is based upon:
the standard deviation of wind velocity over a time period;
simulated data linking at least one operating condition with wind velocity; and/or
absolute values of wind speed and standard deviation of wind speed and wind direction.

9. A method as claimed in any one of the preceding claims wherein, when the rotational speed of the at least one wind turbine (21) is about zero, the first configuration is selected to begin rotation of the at least one wind turbine (21) even if the first configuration is not optimal for maximising power output from the at least one wind turbine (21).

10. A method as claimed in any one of the preceding claims wherein the or each side panels (10, 30) is rotatable about a fixed pivot point and/or extendable and retractable to change in length and at least one panel actuator (108, 109, 308, 309) of the actuators (109, 309, 108, 308, 25) is operable to change the angle of the side panels (10, 30) about the pivot point and/or change the length of the side panels (10, 30).

11. A method as claimed in any one of the preceding claims wherein the turbine-surrounding structure (20) is adjustable by being rotatable for accommodating changes in wind direction and at least one structure actuator (25) of the actuators (109, 309, 108, 308, 25) is operable to change the angle of rotation of the turbine-surrounding structure (20).

12. A method as claimed in any one of the preceding claims wherein, when adjusting the turbine-surrounding structure (20) and/or side panels (10, 30) between the first and second configurations, the angle and/or length of the side panels (10, 30) is adjusted before the adjustment of the angle of the turbine-surrounding structure (20).

13. A method according to any one of the preceding claims wherein the controller (7) comprises a learning system (200) module and the method comprises, by the learning system (200) module, measuring real-time operational data in the second configuration, comparing the measured real-time operational data to anticipated operational data in the second configuration and adjusting parameters of a simulation algorithm and/or look-up table stored in a memory (72) of the control system (200) for predicting operational data of the wind turbine system (200).

14. A method as claimed in any one of the preceding claims comprising initiating a calibration routine when it is determined that wind speed is below a wind speed threshold and/or power generation by the at least one wind turbine (21) is below a power threshold.

15. A wind turbine system (200) comprising:
a convergent section (1), a divergent section (3) and a wind turbine section (2) located between the convergent section (1) and the divergent section (3), wherein:
the wind turbine section (2) comprises at least one wind turbine (21) and an adjustable turbine-surrounding structure (20) that at least partially surrounds the at least one wind turbine (21), the turbine-surrounding structure (20) having openings (22, 23) configurable for wind to pass from the convergent section (1), through the wind turbine section (2) and to the divergent section (3); and
at least one of the convergent and divergent sections (1) comprises adjustable side panels (10, 30) extending away from the wind turbine section (2);
actuators (25, 108, 109, 308, 309) for controlling the configuration of the turbine-surrounding structure (20) and side panels (10, 30); and
a controller (7) for controlling the actuators (109, 309, 108, 308, 25), wherein the controller (7) is configured to perform the method of any one of the preceding claims.

## Patentansprüche

1. Verfahren zum Betreiben eines Windturbinensystems (200), wobei das Windturbinensystem (200) umfasst:
einen konvergierenden Abschnitt (1), einen divergierenden Abschnitt (3) und einen Windturbinenabschnitt (2), welcher zwischen dem konvergierenden Abschnitt (1) und dem divergierenden Abschnitt (3) angeordnet ist, wobei:
der Windturbinenabschnitt (2) wenigstens eine Windturbine (21) und eine anpassbare turbinenumgebende Struktur (20) umfasst, welche die wenigstens eine Windturbine (21) wenigstens teilweise umgibt, wobei die turbinenumgebende Struktur (20) Öffnungen (22, 23) aufweist, welche dafür konfigurierbar sind, dass Wind von dem konvergierenden Abschnitt (1) durch den Windturbinenabschnitt (2) und in den divergierenden Abschnitt (3) strömt; und
wenigstens einer des konvergierenden und des divergierenden Abschnitts (1) anpassbare Seitenpaneele (10, 30) umfasst, welche sich von dem Windturbinenabschnitt (2) weg erstrecken;
Aktuatoren (25, 108, 109, 308, 309) zum Steuern der Konfiguration der turbinenumgebenden Struktur (20) und der Seitenpaneele (10); und
eine Steuereinrichtung (7) zum Steuern der Aktuatoren (25, 108, 109, 308, 309);
wobei das Verfahren umfasst:
Bestimmen, auf Grundlage erster Windgeschwindigkeitsdaten, einer ersten Konfiguration der turbinenumgebenden Struktur (20) und/oder der Seitenpaneele (10, 30) für Wind, um durch den konvergierenden Abschnitt (1) und wenigstens eine der Öffnungen (22, 23) der turbinenumgebenden Struktur (20) in die wenigstens eine Windturbine (21) zu strömen;
Betätigen, durch die Steuereinrichtung (7), wenigstens eines der Aktuatoren (25, 108, 109, 308, 309), um die turbinenumgebende Struktur (20) und/oder die Seitenpaneele (10, 30) in der ersten Konfiguration zu konfigurieren;
Bestimmen zweiter Windgeschwindigkeitsdaten und gemessener Betriebsbedingungsdaten, welche Betriebsbedingungen des Windturbinensystems (200) angeben, während die turbinenumgebende Struktur (20) und/oder die Seitenpaneele (10, 30) in der ersten Konfiguration sind;
Bestimmen, auf Grundlage der zweiten Windgeschwindigkeitsdaten und der gemessenen Betriebsbedingungsdaten, einer zweiten Konfiguration der turbinenumgebenden Struktur (20) und/oder der Seitenpaneele (10, 30) für Wind, um durch den konvergierenden Abschnitt (1) und wenigstens eine der Öffnungen (22, 23) der turbinenumgebenden Struktur (20) in die wenigstens eine Windturbine (21) zu strömen, so dass die wenigstens eine Windturbine (21) Energie erzeugt; und
Betätigen, durch die Steuereinrichtung (7), wenigstens eines der Aktuatoren (25, 108, 109, 308, 309), um die turbinenumgebende Struktur (20) und/oder die Seitenpaneele (10, 30) in der zweiten Konfiguration zu konfigurieren.

2. Verfahren nach Anspruch 1, wobei die erste Konfiguration auf Grundlage der ersten Windgeschwindigkeitsdaten und existierender Konfigurationsdaten bestimmt wird, wobei die existierenden Konfigurationsdaten Windgeschwindigkeiten mit Konfigurationen der turbinenumgebenden Struktur (20) und der Seitenpaneele (10, 30) verknüpfen.

3. Verfahren nach Anspruch 1 oder Anspruch 2, ferner umfassend ein Bestimmen der ersten Windgeschwindigkeitsdaten durch ein Messen der Windgeschwindigkeit an dem Windturbinensystem (200) für einen ersten Zeitraum.

4. Verfahren nach einem der vorhergehenden Ansprüche, ferner umfassend ein Bestimmen der zweiten Windgeschwindigkeitsdaten und der gemessenen Betriebsbedingungsdaten durch ein Messen der Windgeschwindigkeit an dem Windturbinensystem (200) und der Betriebsbedingungen des Windturbinensystems (200) über einen zweiten Zeitraum T2.

5. Verfahren nach einem der vorhergehenden Ansprüche, wobei die zweite Konfiguration auf Grundlage der zweiten Windgeschwindigkeitsdaten und der gemessenen Betriebsbedingungsdaten durch ein Vergleichen der gemessenen Betriebsbedingungsdaten mit antizipierten Betriebsbedingungsdaten bestimmt wird.

6. Verfahren nach einem der vorhergehenden Ansprüche, wobei das Bestimmen der zweiten Konfiguration umfasst:
Bestimmen, auf Grundlage der zweiten Windgeschwindigkeitsdaten und der gemessenen Betriebsbedingungsdaten, einer optimalen Konfiguration der turbinenumgebenden Struktur (20) und/oder der Seitenpaneele (10, 30) zum Maximieren der Energieausgabe der wenigstens einen Windturbine (21);
Bestimmen, ob wenigstens eine Betriebsbedingung des Windturbinensystems (200) in der optimalen Konfiguration wenigstens einen Sicherheitsgrenzwert wahrscheinlich überschreitet oder überschreiten wird; und
wenn der wenigstens eine Sicherheitsgrenzwert wahrscheinlich nicht überschritten wird oder nicht überschritten werden wird, Festlegen der optimalen Konfiguration als die zweite Konfiguration; oder
wenn der wenigstens eine Sicherheitsgrenzwert wahrscheinlich überschritten wird oder überschritten werden wird, Bestimmen einer sicheren Konfiguration, in welcher der wenigstens eine Sicherheitsgrenzwert wahrscheinlich nicht überschritten wird oder nicht überschritten werden wird, und Festlegen der sicheren Konfiguration als die zweite Konfiguration.

7. Verfahren nach Anspruch 6, wobei die wenigstens eine Betriebsbedingung eine Drehzahl der wenigstens einen Windturbine (21), ein Drehmoment an der wenigstens einen Windturbine (21), eine Kraft an einer oder mehreren Komponenten des Windturbinensystems (200), eine Vibration einer oder mehreren Komponenten des Windturbinensystems (200) umfasst und der wenigstens eine Sicherheitsgrenzwert eine maximale Drehzahl, ein maximales Drehmoment, eine maximale Kraft bzw. eine maximale Vibration umfasst:

8. Verfahren nach Anspruch 6 oder Anspruch 7, wobei das Bestimmen, ob wenigstens eine Betriebsbedingung des Windturbinensystems (200) wenigstens einen Sicherheitsgrenzwert wahrscheinlich überschreitet, auf folgendem basiert:
der Standardabweichung einer Windgeschwindigkeit über einen Zeitraum;
simulierten Daten, welche wenigstens eine Betriebsbedingung mit einer Windgeschwindigkeit verknüpfen; und/oder
Absolutwerten einer Windgeschwindigkeit und einer Standardabweichung einer Windgeschwindigkeit und einer Windrichtung.

9. Verfahren nach einem der vorhergehenden Ansprüche, wobei, wenn die Drehzahl der wenigstens einen Windturbine (21) ungefähr null ist, die erste Konfiguration ausgewählt wird, um eine Drehung der wenigstens einen Windturbine (21) zu beginnen, selbst wenn die erste Konfiguration nicht optimal zum Maximieren einer Energieausgabe aus der wenigstens einen Windturbine (21) ist.

10. Verfahren nach einem der vorhergehenden Ansprüche, wobei das oder jedes Seitenpaneel (10, 30) um einen festen Schwenkpunkt drehbar ist und/oder ausziehbar und einziehbar ist, um seine Länge zu ändern, und wenigstens ein Paneelaktuator (108, 109, 308, 309) der Aktuatoren (109, 309, 108, 308, 25) betätigbar ist, um den Winkel der Seitenpaneele (10, 30) um den Schwenkpunkt zu ändern und/oder die Länge der Seitenpaneele (10, 30) zu ändern.

11. Verfahren nach einem der vorhergehenden Ansprüche, wobei die turbinenumgebende Struktur (20) dadurch anpassbar ist, dass sie zum Aufnehmen von Änderungen einer Windrichtung drehbar ist, und wenigstens ein Strukturaktuator (25) der Aktuatoren (109, 309, 108, 308, 25) betätigbar ist, um den Drehwinkel der turbinenumgebenden Struktur (20) zu ändern.

12. Verfahren nach einem der vorhergehenden Ansprüche, wobei, bei dem Anpassen der turbinenumgebenden Struktur (20) und/oder der Seitenpaneele (10, 30) zwischen der ersten und der zweiten Konfiguration, der Winkel und/oder die Länge der Seitenpaneele (10, 30) vor der Anpassung des Winkels der turbinenumgebenden Struktur (20) angepasst wird.

13. Verfahren nach einem der vorhergehenden Ansprüche, wobei die Steuereinrichtung (7) ein Lernsystem- (200) -Modul umfasst und das Verfahren ein Messen von Echtzeitbetriebsdaten in der zweiten Konfiguration, ein Vergleichen der gemessenen Echtzeitbetriebsdaten mit antizipierten Betriebsdaten in der zweiten Konfiguration und ein Anpassen von Parametern eines Simulationsalgorithmus und/oder einer Nachschlagtabelle, welche in einem Speicher (72) des Steuersystems (200) gespeichert ist, zum Vorhersagen von Betriebsdaten des Windturbinensystems (200) durch das Lernsystem- (200) -Modul umfasst.

14. Verfahren nach einem der vorhergehenden Ansprüche, umfassend ein Initiieren einer Kalibrierungsroutine, wenn bestimmt wird, dass eine Windgeschwindigkeit unterhalb eines Windgeschwindigkeitsschwellenwerts liegt und/oder eine Energieerzeugung durch die wenigstens eine Windturbine (21) unterhalb eines Energieschwellenwerts liegt.

15. Windturbinensystem (200), umfassend:
einen konvergierenden Abschnitt (1), einen divergierenden Abschnitt (3) und einen Windturbinenabschnitt (2), welcher zwischen dem konvergierenden Abschnitt (1) und dem divergierenden Abschnitt (3) angeordnet ist, wobei:
der Windturbinenabschnitt (2) wenigstens eine Windturbine (21) und eine anpassbare turbinenumgebende Struktur (20) umfasst, welche die wenigstens eine Windturbine (21) wenigstens teilweise umgibt, wobei die turbinenumgebende Struktur (20) Öffnungen (22, 23) aufweist, welche dafür konfigurierbar sind, dass Wind von dem konvergierenden Abschnitt (1) durch den Windturbinenabschnitt (2) und in den divergierenden Abschnitt (3) strömt; und
wenigstens einer des konvergierenden und des divergierenden Abschnitts (1) anpassbare Seitenpaneele (10, 30) umfasst, welche sich von dem Windturbinenabschnitt (2) weg erstrecken;
Aktuatoren (25, 108, 109, 308, 309) zum Steuern der Konfiguration der turbinenumgebenden Struktur (20) und der Seitenpaneele (10, 30); und
eine Steuereinrichtung (7) zum Steuern der Aktuatoren (109, 309, 108, 308, 25), wobei die Steuereinrichtung (7) dazu eingerichtet ist, das Verfahren nach einem der vorhergehenden Ansprüche durchzuführen.

## Revendications

1. Procédé de fonctionnement d'un système (200) d'éolienne, le système (200) d'éolienne comprenant :
une section convergente (1), une section divergente (3) et une section d'éolienne (2) située entre la section convergente (1) et la section divergente (3), dans lequel :
la section d'éolienne (2) comprend au moins une éolienne (21) et une structure d'encadrement de turbine (20) réglable qui encadre au moins partiellement l'au moins une éolienne (21), la structure d'encadrement de turbine (20) ayant des ouvertures (22, 23) configurables pour que le vent passe depuis la section convergente (1), à travers la section d'éolienne (2) et jusqu'à la section divergente (3) ; et
au moins une des sections convergente et divergente (1) comprend des panneaux latéraux (10, 30) réglables s'étendant à l'opposé de la section d'éolienne (2) ;
des actionneurs (25, 108, 109, 308, 309) pour commander la configuration de la structure d'encadrement de turbine (20) et des panneaux latéraux (10) ; et
un dispositif de commande (7) pour commander les actionneurs (25, 108, 109, 308, 309) ;
dans lequel le procédé comprend :
la détermination, sur la base de premières données de vitesse de vent, d'une première configuration de la structure d'encadrement de turbine (20) et/ou des panneaux latéraux (10, 30) pour que le vent passe à travers la section convergente (1) et au moins une des ouvertures (22, 23) de la structure d'encadrement de turbine (20) jusqu'à l'au moins une éolienne (21) ;
le fonctionnement, par le dispositif de commande (7), d'au moins un des actionneurs (25, 108, 109, 308, 309) pour configurer la structure d'encadrement de turbine (20) et/ou les panneaux latéraux (10, 30) dans la première configuration ;
la détermination de secondes données de vitesse de vent et de données de conditions de fonctionnement mesurées indicatives des conditions de fonctionnement du système (200) d'éolienne alors que la structure d'encadrement de turbine (20) et/ou les panneaux latéraux (10, 30) sont dans la première configuration ;
la détermination, sur la base des secondes données de vitesse de vent et des données de conditions de fonctionnement mesurées, d'une seconde configuration de la structure d'encadrement de turbine (20) et/ou des panneaux latéraux (10, 30) pour que le vent passe à travers la section convergente (1) et au moins une des ouvertures (22, 23) de la structure d'encadrement de turbine (20) jusqu'à l'au moins une éolienne (21) de sorte que l'au moins une éolienne (21) génère de l'énergie ; et
le fonctionnement, par le dispositif de commande (7), d'au moins un des actionneurs (25, 108, 109, 308, 309) pour configurer la structure d'encadrement de turbine (20) et/ou les panneaux latéraux (10, 30) dans la seconde configuration.

2. Procédé selon la revendication 1 dans lequel la première configuration est déterminée sur la base des premières données de vitesse de vent et de données de configuration existantes, les données de configuration existantes établissant un lien entre des vitesses de vent et des configurations de la structure d'encadrement de turbine (20) et des panneaux latéraux (10, 30).

3. Procédé selon la revendication 1 ou la revendication 2 comprenant en outre la détermination des premières données de vitesse de vent en mesurant la vitesse de vent au niveau du système (200) d'éolienne pendant une première période de temps.

4. Procédé selon l'une quelconque des revendications précédentes comprenant en outre la détermination des secondes données de vitesse de vent et des données de conditions de fonctionnement mesurées en mesurant la vitesse de vent au niveau du système (200) d'éolienne et les conditions de fonctionnement du système (200) d'éolienne sur une seconde période de temps T2.

5. Procédé selon l'une quelconque des revendications précédentes dans lequel la seconde configuration est déterminée sur la base des secondes données de vitesse de vent et des données de conditions de fonctionnement mesurées en comparant les données de conditions de fonctionnement mesurées à des données de conditions de fonctionnement prévues.

6. Procédé selon l'une quelconque des revendications précédentes, dans lequel la détermination de la seconde configuration comprend :
la détermination, sur la base des secondes données de vitesse de vent et des données de conditions de fonctionnement mesurées, d'une configuration optimale de la structure d'encadrement de turbine (20) et/ou des panneaux latéraux (10, 30) pour maximiser la sortie d'énergie de l'au moins une éolienne (21) ;
la détermination si au moins une condition de fonctionnement du système (200) d'éolienne risque de ou va dépasser au moins une limite de sécurité dans la configuration optimale ; et
si l'au moins une limite de sécurité ne risque pas ou ne va pas être dépassée, la définition de la configuration optimale en tant que seconde configuration ; ou
si l'au moins une limite de sécurité risque ou va être dépassée, la détermination d'une configuration sûre dans laquelle l'au moins une limite de sécurité ne risque pas ou ne va pas être dépassée, et la définition de la configuration sûre en tant que seconde configuration.

7. Procédé selon la revendication 6 dans lequel l'au moins une condition de fonctionnement comprend une vitesse de rotation de l'au moins une éolienne (21), un couple sur l'au moins une éolienne (21), une force sur un ou plusieurs éléments du système (200) d'éolienne, une vibration d'un ou plusieurs éléments du système (200) d'éolienne et l'au moins une limite de sécurité comprend une vitesse de rotation maximale, un couple maximal, une force maximale et/ou une vibration maximale, respectivement.

8. Procédé selon la revendication 6 ou la revendication 7 dans lequel la détermination si au moins une condition de fonctionnement du système (200) d'éolienne risque de dépasser au moins une limite de sécurité est basée sur :
l'écart-type de vitesse de vent sur une période de temps ;
des données simulées établissant un lien entre au moins une condition de fonctionnement et la vitesse de vent ; et/ou des valeurs absolues de vitesse de vent et un écart-type de vitesse de vent et de direction de vent.

9. Procédé selon l'une quelconque des revendications précédentes dans lequel, lorsque la vitesse de rotation de l'au moins une éolienne (21) est d'environ zéro, la première configuration est sélectionnée pour commencer la rotation de l'au moins une éolienne (21) même si la première configuration n'est pas optimale pour maximiser la sortie d'énergie provenant de l'au moins une éolienne (21).

10. Procédé selon l'une quelconque des revendications précédentes dans lequel le ou chaque panneau latéral (10, 30) est rotatif autour d'un point de pivotement fixe et/ou extensible et rétractable pour changer de longueur et au moins un actionneur (108, 109, 308, 309) de panneau des actionneurs (109, 309, 108, 308, 25) peut servir à changer l'angle des panneaux latéraux (10, 30) autour du point de pivotement et/ou changer la longueur des panneaux latéraux (10, 30) .

11. Procédé selon l'une quelconque des revendications précédentes dans lequel la structure d'encadrement de turbine (20) est réglable en étant rotative pour s'adapter aux changements de direction de vent et au moins un actionneur (25) de structure des actionneurs (109, 309, 108, 308, 25) peut servir à changer l'angle de rotation de la structure d'encadrement de turbine (20).

12. Procédé selon l'une quelconque des revendications précédentes dans lequel, lors du réglage de la structure d'encadrement de turbine (20) et/ou des panneaux latéraux (10, 30) entre les première et seconde configurations, l'angle et/ou la longueur des panneaux latéraux (10, 30) sont réglés avant le réglage de l'angle de la structure d'encadrement de turbine (20).

13. Procédé selon l'une quelconque des revendications précédentes dans lequel le dispositif de commande (7) comprend un module de système (200) d'apprentissage et le procédé comprend, par le module de système (200) d'apprentissage, la mesure de données de fonctionnement en temps réel dans la seconde configuration, la comparaison des données de fonctionnement en temps réel mesurées à des données de fonctionnement prévues dans la seconde configuration et le réglage de paramètres d'un algorithme de simulation et/ou d'une table de consultation stockés dans une mémoire (72) du système (200) de commande pour prédire des données de fonctionnement du système (200) d'éolienne.

14. Procédé selon l'une quelconque des revendications précédentes comprenant le lancement d'une routine d'étalonnage lorsqu'il est déterminé que la vitesse de vent est inférieure à un seuil de vitesse de vent et/ou que la production d'énergie par l'au moins une éolienne (21) est inférieure à un seuil d'énergie.

15. Système (200) d'éolienne comprenant :
une section convergente (1), une section divergente (3) et une section d'éolienne (2) située entre la section convergente (1) et la section divergente (3), dans lequel :
la section d'éolienne (2) comprend au moins une éolienne (21) et une structure d'encadrement de turbine (20) réglable qui encadre au moins partiellement l'au moins une éolienne (21), la structure d'encadrement de turbine (20) ayant des ouvertures (22, 23) configurables pour que le vent passe depuis la section convergente (1), à travers la section d'éolienne (2) et jusqu'à la section divergente (3) ; et
au moins une des sections convergente et divergente (1) comprend des panneaux latéraux (10, 30) réglables s'étendant à l'opposé de la section d'éolienne (2) ;
des actionneurs (25, 108, 109, 308, 309) pour commander la configuration de la structure d'encadrement de turbine (20) et des panneaux latéraux (10, 30) ; et
un dispositif de commande (7) pour commander les actionneurs (109, 309, 108, 308, 25), dans lequel le dispositif de commande (7) est configuré pour réaliser le procédé selon l'une quelconque des revendications précédentes.
